# EUROPEAN PATENT APPLICATION

(11) **EP 4 527 594 A1**
(43) Date of publication of application: **26.03.2025**
(21) Application number: 23199296.7
(22) Date of filing: 25.09.2023
(51) Int. Cl.: B29C 65/16, B29C 65/78, F21S 41/00

(54) **ASSEMBLY METHOD OF AN AUTOMOTIVE LIGHTING UNIT AND MACHINE IMPLEMENTING SAID METHOD**

(71) Applicant: Marelli Automotive Lighting Italy S.p.A. Con Socio Unico, 10078 Venaria Reale (TO) (IT)
(72) Inventor: BUZZURRO, Alessandro, 33028 TOLMEZZO (UD) (IT); FERIGO, Domenico, 33028 TOLMEZZO (UD) (IT)
(74) Representative: Studio Torta S.p.A.

(57) **Abstract**

An assembly method of an automotive lighting unit (100) that comprises: a rear casing (101), which is concave in shape and is adapted to be fixed to the vehicle body; an at least partially transparent front half-shell (102), which is arranged to close the mouth of said rear casing (101) so as to form/delimit a hollow housing; and at least one lighting assembly (103), which is located inside the rear casing (101) and is adapted to backlight the front half-shell (102); the assembly method comprising the steps of: realizing a rear casing (101) having at least one sector made of opaque polymeric material; realizing at least one internal lighting component (104) having at least a portion made of opaque polymeric material; placing said at least one internal lighting component (104) inside the rear casing (101), with said portion made of opaque polymeric material resting on the opaque-polymeric-material sector of the rear casing (101), in at least one contact area (105); and securing said at least one internal lighting component (104) to the rear casing (101) by making at least one laser welding joint (106) at said at least one contact area (105).

## Description

### TECHNICAL FIELD

The present invention concerns an assembly method of an automotive lighting unit and a machine implementing said method.

In further detail, the present invention concerns a method and a machine for fixing components made of opaque plastic material inside the rear casing of a headlight or taillight for cars and similar motor vehicles. Uso to which the following disclosure will explicitly refer without however losing generality.

### STATE OF THE ART

As known, a headlight or taillight for cars and similar motor vehicles is conventionally a lighting apparatus specifically structured to be located in the front, rear or lateral part of the vehicle, and performs the function of lighting the area surrounding the vehicle and/or the function of signalling the position of the vehicle, sudden deceleration of the vehicle and/or turning direction of the vehicle, in compliance with given photometric type-approval standards.

The majority of taillights for cars and similar motor vehicles usually comprise: a rear casing with substantially rigid and opaque structure, which is substantially basin-shaped and is structured so as to be stably recessed in a compartment specifically realized in the rear part of the vehicle body; a front half-shell with substantially rigid and transparent structure, separate and distinct from the rear casing, which has a shape complementary to the mouth of the rear casing and is arranged to close the mouth of the rear casing, usually so as to surface outside of the vehicle body; and a series of electrically-powered lighting assemblies, which are located inside the rear casing, each one immediately beneath a corresponding transparent or semi-transparent sector of the front half-shell, so as to selectively backlight the overlying transparent or semi-transparent sector of the front half-shell.

Generally each transparent or semi-transparent sector of the front half-shell is moreover uniquely associated to a specific light signal, hence the various lighting assemblies present inside the hollow housing formed/delimited by the front half-shell and by the rear casing are structured so as to emit, on command, a light beam that, once exited from the lighting unit through the corresponding transparent or semi-transparent sector of the half-shell, meets the photometric type-approval standards (light colour and distribution) specified for said light signal.

Currently, both the rear casing and the front half-shell have a monolithic structure and are made of polymeric material via injection moulding.

In further detail, the rear casing is made entirely of opaque polymeric material, whereas the front half-shell is made entirely or almost entirely of transparent and/or semi-transparent polymeric material.

In the latest headlights and taillights, furthermore, the front half-shell is joined in a non-removable manner to the rear casing via laser welding along the entire perimeter rim of the mouth of the rear casing.

The lighting assemblies located inside the rear casing, in turn, usually use a series of LEDs (acronym of Light Emitting Diode) as light sources, and generally also include one or more reflector bodies that reflect the light produced by the LEDs towards the facing transparent or semi-transparent sector of the front half-shell, and/or one or more light-guide bodies that collect the light produced by the LEDs and channel it by total internal reflection to the facing transparent or semi-transparent sector of the front half-shell.

In addition, these lighting assemblies usually also comprise filters, corrective optics, shielding masks and/or other active and/or passive optical devices, which are able to adapt the light beam emitted by the various LEDs to the photometric and aesthetic requirements associated to automotive use.

Lastly, the majority of the taillights described above are moreover provided with internal bezels, brackets and/or other support members that fit into the rear casing, or more simply rest on the inner surface of the rear casing, and are structured to support the printed circuit board or boards accommodating the LEDs, the reflector body or bodies, the light-guide body or bodies and/or the other active and/or passive optical devices that contribute to forming each lighting assembly, and/or the electric wiring that powers and/or controls the various lighting assemblies.

It is known the possibility of fixing the internal lighting components made of transparent polymeric material in a rigid and non-removable manner to the rear casing via laser welding.

Said possibility, however, is ruled out for the internal components made of opaque polymeric material due to the operating limits associated to the current laser welding processes, such as, for example, the destructive overheating of the opaque polymeric material hit by the laser beam.

Clearly this operating limit considerably complicates the assembly of the taillights, because the internal components made of opaque polymeric material are the most numerous inside the taillight.

Currently, in fact, the majority of the components that contribute to forming the lighting assemblies of the taillight and the majority of the internal support members are made of opaque polymeric material and are firmly fixed to the rear casing by means of a series of self-threading metal screws, the majority of which are inserted in pass-through manner in the rear casing from the outside towards the inside of the taillight, so as to arrange the head of the screw in abutment on the outer surface of the casing.

In addition, some internal components of the automotive lighting unit can be retained inside the casing also by a series of shoulders, centring pins and/or snap-on locking tabs made inside the rear casing. These centring and/or snap-on locking systems, however, are used only during the assembly of the lighting unit, because they are generally not able to withstand the mechanical vibrations to which automotive lighting units are normally subjected to during use.

Currently, therefore, self-threading screws are the only means able to secure the main components or macro-components of the automotive lighting unit firmly in place inside the rear casing for the entire life of the same automotive lighting unit.

The present-day assembly lines for automotive lighting units are therefore currently provided with a series of automatic or semi-automatic screwdrivers, which enable the operators working on the assembly line to place and screw the self-threading screws into the rear casing as rapidly as possible.

Unfortunately, although essential for realizing the taillight, the self-threading screws make the assembly of the taillight relatively laborious and also significantly affect the overall weight and cost of the light. Being made of metal, in fact, the self-threading screws are some of the most costly components of the lighting unit.

In addition, the self-threading screws occasionally jam inside the automatic screwdriver, making the tool unserviceable, with all the problems that this entails. Restoring the automatic or semi-automatic screwdriver, in fact, can require several minutes, during which the assembly line is necessarily at a standstill.

### OBJECT OF THE INVENTION

Aim of the present invention is to eliminate or in any case minimize the use of self-threading screws, so as to simplify and speed up the assembly of automotive lighting units.

In accordance with these aims, according to the present invention there is provided an assembly method of an automotive lighting unit as defined in Claim 1 and preferably, though not necessarily, in any one of the dependent claims.

In addition, according to the present invention, there is provided an automotive-lighting-units assembly machine as defined in Claim 9 and preferably, though not necessarily, in any one of the dependent claims.

Lastly, according to the present invention, there is provided an automotive lighting unit as defined in Claim 13 and preferably, though not necessarily, in any one of the dependent claims.

### BRIEF DESCRIPTION OF THE FIGURES

The present invention will now be described with reference to the attached drawings, which illustrate a non-limiting embodiment example thereof, in which:
- Figure 1 is a schematic front view of an automotive-lighting-units assembly machine realized according to the teachings of the present invention, with parts removed for clarity's sake;
- Figure 2 is a perspective view of an automotive lighting unit realized according to the teachings of the present invention, with parts in section and parts removed for clarity's sake;
- Figure 3 is a partially-exploded perspective view of the automotive lighting unit illustrated in figure 2, with parts removed for clarity's sake;
- Figure 4 is a lateral view of the automotive lighting unit illustrated in Figures 2 and 3, with parts in section and parts removed for clarity's sake;
- Figure 5 is a perspective view of a part of the automotive-lighting-units assembly machine illustrated in Figure 1, with parts removed for clarity's sake;
- figures 6, 7, 8 and 9 show the operation of the automotive-lighting-units assembly machine illustrated in Figures 1 and 8, with parts in section and parts removed for clarity's sake;
- Figures 10 and 11 show the temperature trends during some experimental tests; whereas
- Figure 12 schematically shows a variation of the assembly method of the automotive lighting unit illustrated in Figures 2, 3 and 4.

### DETAILED DISCLOSURE OF EMBODIMENTS

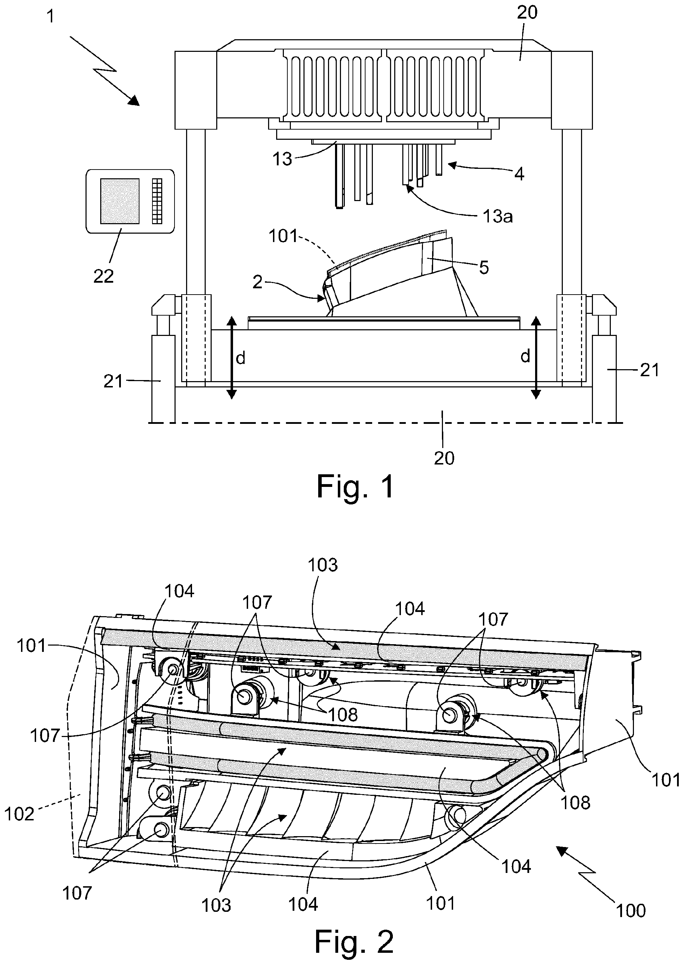

With reference to Figure 1, number 1 denotes as a whole an automotive-lighting-units assembly machine, which is adapted to carry out the laser welding of plastic parts.

In further detail, the machine 1 is specifically structured to laser-weld, directly on the rear casing of an automotive lighting unit 100, at least part of the components made of opaque polymeric material, which are located inside the rear casing and contribute to forming the automotive lighting unit 100.

The term "automotive lighting unit" indicates a lighting apparatus structured to be firmly fixed on the front or rear part of the vehicle body of a motor vehicle (not illustrated), with the function of emitting light signals adapted to signal/ indicate the position of the vehicle and/or the sudden deceleration of the vehicle and/or the turning direction of the vehicle during travel and/or with the function of lighting the area surrounding the vehicle.

In further detail, the automotive lighting unit 100 is adapted to be fixed on the front or rear part of the vehicle body of a car, van, lorry, motorcycle or other similar motor vehicle, to perform the function of a headlight or taillight.

Optionally, the automotive lighting unit 100 may also be used to display luminous signs and/or graphic or alphanumeric symbols.

Clearly the automotive lighting unit 100 may also be placed on a lateral side of the car or other similar motor vehicle.

Preferably the automotive lighting unit 100 is moreover structured so as to be stably recessed in the vehicle body (not illustrated) and to surface outside of the latter.

With reference to Figures 2, 3 and 4, in particular, the automotive lighting unit 100 comprises: a substantially rigid rear casing 101, which is concave in shape and is adapted to be firmly fixed to the vehicle body (not illustrated), preferably inside a seat specifically provided in said body; and a substantially rigid and at least partially transparent, front half-shell 102, separate and distinct from the rear casing 101, which has a roughly lenticular shape/structure and is firmly fixed to the rear casing 101 to at least partially close the mouth of the latter, so as to form/delimit, together with the rear casing 101, an internally hollow rigid housing.

In further detail, the rear casing 101 is preferably shaped substantially in the form of an, advantageously oblong, basin and/or has a nominal thickness preferably between 1 and 4 mm (millimetres).

The front half-shell 102, on the other hand, is preferably shaped/structured so as to substantially entirely close the mouth of the rear casing 101. In other words, the front half-shell 102 is preferably shaped so as to form/delimit, together with the rear casing 101, an internally hollow, closed rigid housing.

In addition, the rear casing 101 has a structure which is overall opaque to visible light and is at least partially made of polymeric material. In other words, the rear casing 101 is at least partially made of opaque polymeric material.

The front half-shell 102, on the other hand, has a structure which is overall transparent to visible light and is preferably at least partially made of transparent polymeric material.

Preferably the front half-shell 102 is furthermore shaped and structured so as to surface outside of the vehicle body.

In addition, the automotive lighting unit 100 also comprises a series of internal lighting components, which contribute to forming one or more lighting assemblies 103 that is/are placed inside the rear casing 101 and is/are adapted to backlight the front half-shell 102.

Preferably the lighting assembly or assemblies 103 is/are furthermore electrically-powered lighting assemblies that is/ are adapted to emit light on command and is/are advantageously also entirely contained inside the rear casing 101.

In other words, the automotive lighting unit 100 preferably comprises one or more electrically-powered lighting assemblies 103, each of which emits light on command and is located inside the rear casing 101 so as to selectively backlight the front half-shell 102.

In further detail, with reference to Figures 2, 3 and 4, the rear casing 101 preferably has a monolithic structure, and is preferably made entirely or almost entirely of polymeric material opaque to visible light, advantageously by injection moulding.

Similarly the front half-shell 102 preferably has a monolithic structure, and is preferably entirely or almost entirely made of polymeric material transparent to visible light, advantageously by injection moulding.

In addition, the front half-shell 102 preferably has a shape substantially complementary to the mouth of the rear casing 101, and is preferably firmly fixed on the rear casing 101 along the perimeter rim of said mouth.

Preferably, the front half-shell 102 is furthermore rigidly fixed to the rear casing 101 in a substantially fluid-tight manner.

In further detail, the front half-shell 102 is preferably fixed in a non-removable manner to the rear casing 101 via welding.

In greater detail, the front half-shell 102 is preferably fixed in a non-removable manner to the rear casing 101 via a welding bead that extends along the perimeter rim of the mouth of rear casing 101, advantageously substantially seamlessly.

In the example shown, in particular, the automotive lighting unit 100, or rather the rear casing 101, is preferably structured so as to be recessed in the rear part of the vehicle body of a car or other similar motor vehicle.

In other words, the automotive lighting unit 100 is preferably a taillight for cars and the like.

Clearly the automotive lighting unit 100 may also be a headlight for cars and the like.

Obviously, in a different embodiment, the automotive lighting unit 100 may also be structured so as to be simply cantilever-fixed on the front, lateral or rear part of the vehicle body (not illustrated).

With reference to Figures 2, 3 and 4, in the example shown, in particular, the rear casing 101 is preferably made entirely or almost entirely of a thermoplastic polymer opaque to visible light.

In further detail, the rear casing 101 is preferably made entirely or almost entirely of acrylonitrile-butadiene-styrene (ABS) or other polymeric material filled with carbon black or other opacifying pigment(s).

Preferably the rear casing 101 is moreover provided, on the outer surface, with a series of bushings and/or other fixing appendages that allow the rear casing 101 to be rigidly secured to the vehicle body (not illustrated).

Obviously, in a different embodiment, the rear casing 101 may also be shaped and/or structured so as to be at least partially recessed into a seat specifically realized in the front or lateral part of the vehicle body (not illustrated), or so as to be simply cantilever-fixed on the front, lateral or rear part of the vehicle body.

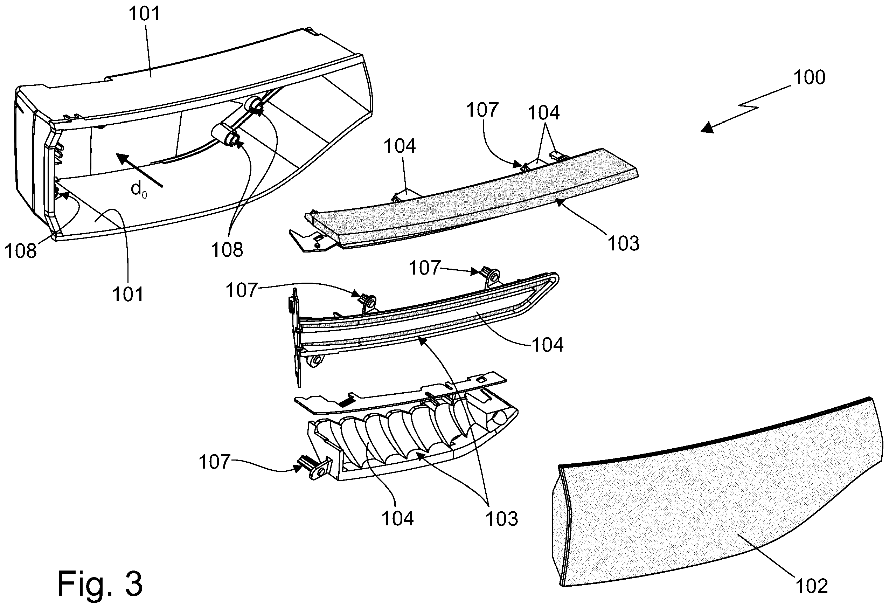

With reference to Figures 2 and 3, the front half-shell 102, on the other hand, is provided with one or more transparent or semi-transparent sectors (i.e. sectors that allow the passage of visible light), optionally also having different colours from one another, and is preferably made entirely or almost entirely of a transparent thermoplastic polymer.

In further detail, the front half-shell 102 is preferably made of transparent polycarbonate (PC), transparent polymethylmethacrylate (PMMA) or other transparent or semi-transparent polymeric material.

Clearly the front half-shell 102 may also include one or more opaque sectors adjoining said transparent or semi-transparent sector(s) .

Preferably the front half-shell 102 is furthermore welded directly to the rear casing 101 in known manner, via laser welding, vibration welding or hot-plate welding.

With reference to Figures 2, 3 and 4, the/each lighting assembly 103 is preferably located inside the rear casing 101 so as to be locally aligned to a corresponding transparent or semi-transparent sector of the front half-shell 102, thus selectively backlight the same transparent or semi-transparent sector of the front half-shell 102, preferably separately and independently of the other lighting assemblies 103 of the automotive lighting unit 100.

Preferably the/each of the lighting assemblies 103 is furthermore structured so as to emit, on command, a light beam which, once exited from the automotive lighting unit 100 through the front half-shell 102, meets the photometric type-approval standards (light colour and distribution) specified for a given light signal.

Clearly one or some lighting assemblies 103 may also emit a light beam that does not meet or must meet said photometric type-approval standards.

For example, one or some lighting assemblies 103 may be used to display luminous signs and/or luminous graphic or alphanumeric symbols.

With reference to Figures 2, 3 and 4, in particular, the automotive lighting unit 100 is provided with a plurality of internal components, separate and distinct from the rear casing 101 and from the front half-shell 102, which preferably contribute to forming the lighting assembly or assemblies 103.

Some of these internal components are substantially rigid and at least partially made of polymeric material opaque to visible light.

In addition, one or more of these internal components made at least partially of opaque polymeric material, in the following denoted by the number 104, is/are arranged with the part made of opaque polymeric material resting on the inner surface of the rear casing 101 at appropriate mutual contact areas 105, and are rigidly and non-removably fixed directly to the rear casing 101 by means of at least one laser welding joint 106 made at said mutual contact area(s) 105.

Preferably the contact area 105 between the rear casing 101 and the internal component 104 is furthermore substantially flat.

The laser welding joint 106, on the other hand, is preferably substantially a spotlike and/or has an extension less than or equal to 100 mm² (square millimetres). Clearly the laser welding joint 106 may also have the shape of a line.

In other words, each internal component 104 is arranged with the part made of opaque polymeric material resting on the inner surface of the rear casing 101 in at least one contact area or zone 105, and is rigidly and non-removably secured to the rear casing 101 by means of at least one laser welding joint 106 made at said contact area or zone 105.

At the mutual contact area 105, therefore, the rear casing 101 and the internal component 104 are both made of polymeric material opaque to visible light.

Clearly the laser welding joint 106 is made in the mutual contact area 105, straddling a portion of the rear casing 101 and the adjacent portion of the internal component 104, both made of opaque polymeric material.

In further detail, the internal component or components 104 preferably has/have a monolithic structure, and is/are preferably made entirely of opaque polymeric material, advantageously by injection moulding. In other words, the internal component or components 104 is/are preferably made entirely of an opaque thermoplastic polymer.

In addition, the rear casing 101 and the internal component or components 104 are preferably made of respective opaque polymeric materials which have, at least in the neighbourhood of the mutual contact area 105, different laser beam absorption coefficients µ (Beer-Lambert law).

In other words, the contact area 105 between the rear casing 101 and the internal component 104 is formed/defined by two pieces or portions made of polymeric material opaque to visible light, which preferably have different laser-beam absorption coefficients µ.

More specifically, at the contact area 105 the difference between the absorption coefficients µ of the two opaque polymeric materials is preferably higher than 350 of the absorption coefficient µ with higher value.

Alternatively, the rear casing 101 and the internal component or components 104 may be made of opaque polymeric materials having, at least in the neighbourhood of the mutual contact area 105, substantially equal absorption coefficients µ.

Clearly the absorption coefficient µ depends on the composition of the polymeric material, the density of the polymeric material, the quantity of carbon black or other additive contained in the polymeric material per unit of volume, and/or the wavelength λ of the laser beam that penetrates into the polymeric material.

The internal lighting component or components 104 preferably include, for example, one or more reflector bodies and/or shielding masks and/or corrective lenses and/or diffuser filters and/or coloured lenticular filters and/or reflex reflectors and/or fixing bezels and/or brackets or other auxiliary support structures, which are at least partially made of opaque polymeric material, and are arranged with the part made of opaque polymeric material resting on the inner surface of the rear casing 101.

With reference to figures 2, 3 and 4, preferably the rear casing 101 and the internal component 104 are furthermore shaped/structured so as to realize, in the mutual contact area or areas 105, a shape coupling.

In further detail, the rear casing 101 and the internal component 104 are preferably shaped/structured so as to realize, in the mutual contact area or areas 105, a male-female coupling.

In greater detail, the/each internal component 104 is preferably provided with one or more protruding fixing pins 107 made of opaque polymeric material, each of which extends parallel to a predefined insertion direction d₀, and is adapted to arrange its distal end in abutment aginst the inner surface of the rear casing 101, at a respective contact area 105.

Preferably the laser welding joint 106 is moreover located at the distal end of the fixing pin 107.

In addition, the/each fixing pin 107 is preferably also adapted to engage a corresponding receiving seat 108, which is realized directly on the rear casing 101, or rather on the bottom of the rear casing 101, and is preferably substantially cup-shaped.

Preferably the mutual contact area 105 is furthermore located inside said receiving seat 108.

In further detail, the distal end of fixing pin 107 is preferably adapted to stably rest on the bottom of receiving seat 108, and the contact area 105 is preferably located on the bottom of receiving seat 108.

More specifically, the receiving seat 108 preferably has a shape substantially complementary to that of the distal end of fixing pin 107.

Clearly, in a different embodiment, the fixing pins may protrude cantilevered from the bottom of the rear casing 101 and the receiving seats may be located on the internal component(s) 104 made of opaque polymeric material.

Optionally the automotive lighting unit 100 may also comprise one or more cameras and/or one or more photosensitive sensors and/or one or more radar devices and/or one or more LiDAR (acronym of Light Detection and Ranging) instruments and/or other supplementary electronic devices, still housed inside the rigid housing formed/delimited by the rear casing 101 and by the front half-shell 102.

Also this or these supplementary electronic devices preferably include, or can include, one or more internal components at least partially made of opaque polymeric material 104, which are arranged with the part made of opaque polymeric material resting on the inner surface of rear casing 101 in at least one corresponding contact area 105, and are secured in a rigid non-removable manner to the rear casing 101 by means of at least one laser welding joint 106 made at said contact area 105.

With reference to Figures 1, 5, 6, 7, 8 and 9, the automotive-lighting-units assembly machine 1 is adapted to form the laser welding joint (s) 106 which, at the contact area or areas 105, are adapted to secure the internal component or components 104 in a rigid non-removable manner directly on the rear casing 101, or rather directly on the inner surface of rear casing 101.

The welding machine 1 firstly comprises: a workpiece carrying fixture 2, which is structured so as to temporarily accommodate and advantageously also retain the rear casing 101 with one or more internal components 104 inside; and a laser appliance 3 that, on command, is adapted to generate and direct a plurality of laser beams towards/against the rear casing 101 accommodated in the workpiece carrying fixture 2.

In further detail, the workpiece carrying fixture 2 is structured so as to temporarily accommodate and advantageously also retain the rear casing 101 with inside one or more internal components 104 which rest on the inner surface of rear casing 101 at respective contact areas 105.

In other words, the workpiece carrying fixture 2 is adapted to accommodate a rear casing 101 provided with at least one sector made of opaque polymeric material, and also with at least one internal component 104 which, in turn, is located inside the rear casing 101 and is provided with at least one portion made of opaque polymeric material that rests on the sector made of opaque polymeric material of rear casing 101, in at least one contact area 105.

The laser appliance 3, in turn, is adapted to generate and direct, from different directions, a plurality of separate and distinct laser beams r₁, r₂ .... rₙ towards the workpiece carrying fixture 2, so that at least part of said laser beams r₁, r₂ .... rₙ cross/intersect at a respective intersection point P, which is located substantially at a contact area or zone 105 between the rear casing 101 and an internal component 104, thus to make at least one laser welding joint 106 at said contact area 105.

In further detail, the laser appliance 3 is adapted to direct at least two different laser beams r₁ and r₂ inside the workpiece carrying fixture 2, so that said laser beams r₁ and r₂ intersect/cross each other at an intersection point P located inside the workpiece carrying fixture 2, substantially at a contact area 105 between the rear casing 101 and the internal component 104, in order to locally add up the powers of the same laser beams r₁ and r₂.

Clearly the laser appliance 3 may also direct more than two laser beams r₁ and r₂ towards the same intersection point P.

In addition, the laser appliance 3 and the workpiece carrying fixture 2 are structured so that the laser beams r₁, r₂ .... rₙ, directed towards the contact area 105, reach/strike the outer surface of the rear casing 101 passing through the workpiece carrying fixture 2.

In other words, the laser appliance 3 is preferably coupled to the workpiece carrying fixture 2 so that the laser beam or beams r₁, r₂ .... rₙ reach the rear casing 101 stationary in the workpiece carrying fixture 2 without passing through the mouth of said rear casing 101.

With reference to Figures 1, 6, 7 and 8, preferably the automotive-lighting-units assembly machine 1 additionally comprises also a pressing assembly 4, which is selectively adapted to press against the inner surface of rear casing 101 accommodated in the workpiece carrying fixture 2 one or more internal components 104 previously placed inside the same rear casing 101.

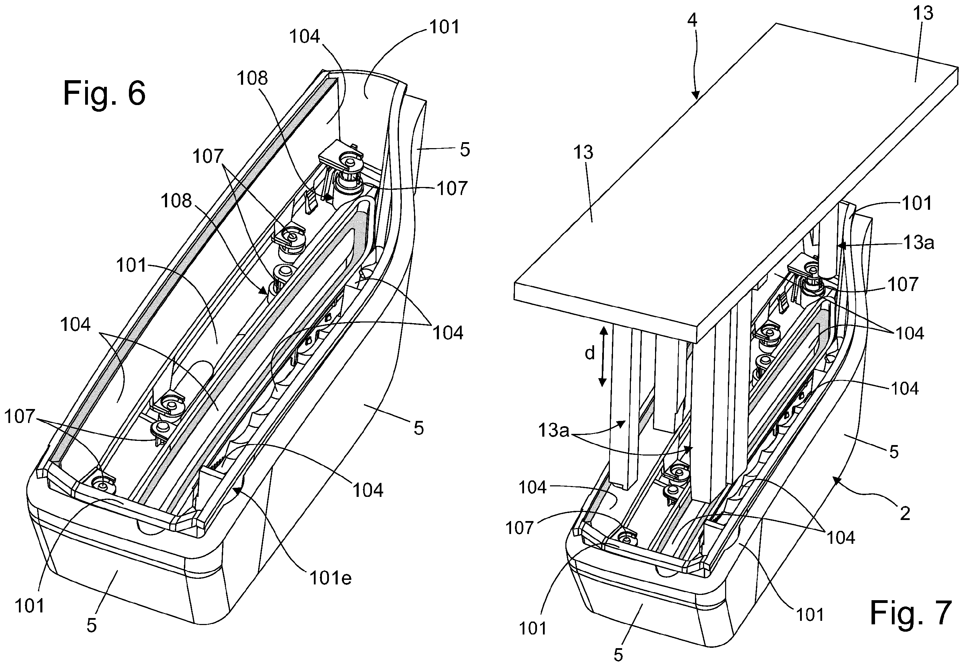

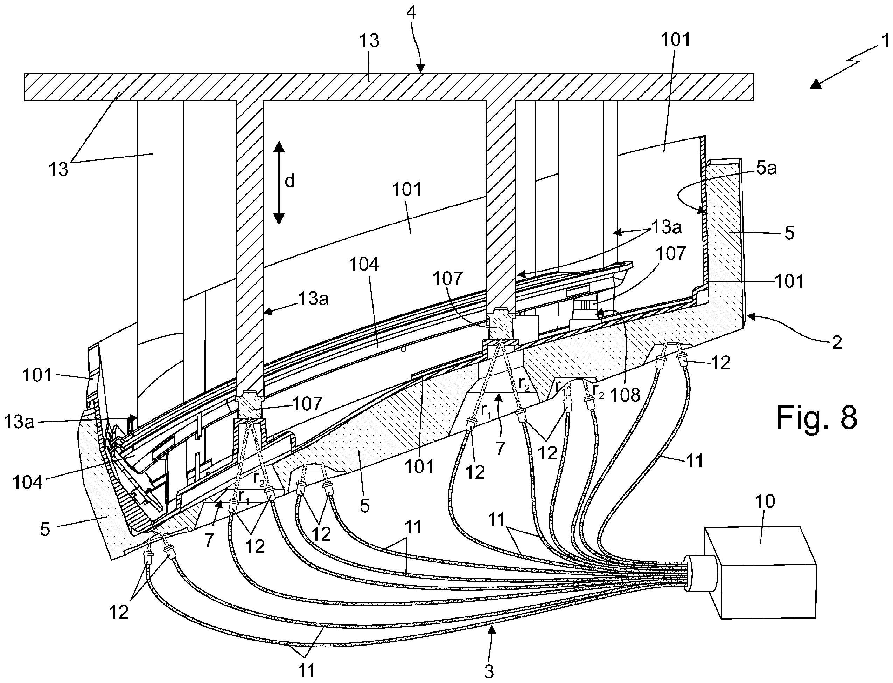

In further detail, the pressing assembly 4 is preferably movable from and towards the workpiece carrying fixture 2 or vice versa, and is preferably structured so as to penetrate, when it is at a predefined minimum distance from the workpiece carrying fixture 2 (see Figures 7 and 8), inside the rear casing 101 accommodated in the workpiece carrying fixture 2 through the mouth of the same rear casing 101, for abutting on at least a part of the internal component or components 104 present inside the rear casing 101, and then press the same internal components 104 against the inner surface of said rear casing 101, at the relative contact area or areas 105.

With reference to Figures 1, 5, 6, 7 and 8, in particular, the workpiece carrying fixture 2 preferably includes: a workpiece carrying template 5 with substantially non-deformable structure, which is preferably made of metallic material, and is provided with a receiving seat 5a adapted to accommodate the rear casing 101; and preferably also one or more, advantageously electrically- or pneumatically- operated, locking members (not visible in the figures) which are at least partially located on the workpiece carrying template 5 and are adapted to lock/immobilize, on command, the rear casing 101 in the receiving seat of the workpiece carrying template 5.

In further detail, the receiving seat 5a of the workpiece carrying template 5 preferably has a shape substantially complementary to that of the rear casing 101, and is provided with an access mouth through which the rear casing 101 is inserted and removed from the same receiving seat 5a.

In addition, the workpiece carrying template 5 is provided with one or more, advantageously in air, through passages 7 each of which extends through the body of the workpiece carrying template 5 up to the receiving seat 5a, and is structured so as to allow the laser beams r₁, r₂ .... rₙ emitted by the laser appliance 3 to cross the same workpiece carrying template 5 substantially without energy losses or with minimum energy losses, until reaching the outer surface of the rear casing 101 momentarily accommodated in the workpiece carrying template 5.

In other words, the/each through passage 7 preferably ends in the receiving seat 5a of the workpiece carrying template 5, so as to be directly faced to the rear casing 101 momentarily accommodated in the same receiving seat.

In further detail, the/each through passage 7 preferably ends inside the receiving seat 5a of the workpiece carrying template 5, so as to be locally aligned to a corresponding contact area 105 between the rear casing 101 and an internal component 104.

In the example shown, in particular, the/each internal through passage 7 preferably consists of an opening, hole or rectilinear through duct, which is realized in the body of the workpiece carrying template 5, on a side opposite to the mouth of the receiving seat 5a.

Preferably said opening, hole or rectilinear through duct is moreover locally aligned to a corresponding contact area 105 present inside the rear casing 101 momentarily accommodated in the receiving seat 5a of the workpiece carrying template 5.

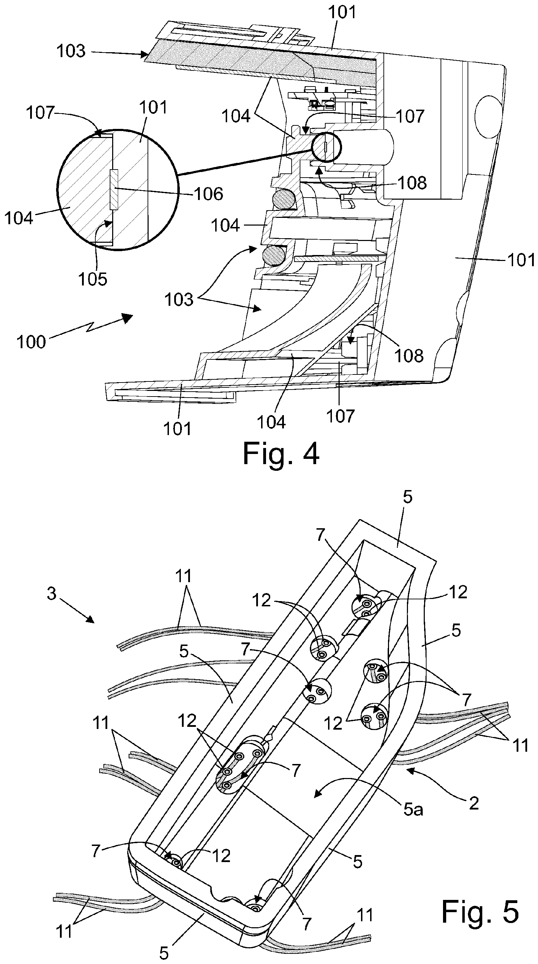

With particular reference to Figures 5, 8 and 9, the laser appliance 3 preferably comprises: at least one electrically-powered laser source 10, which is able to emit, on command, a high-power laser beam, advantageously with predefined and substantially constant intensity and/or emission spectrum; and a plurality of optic fibres 11, which end in at least one internal through passage 7 of the workpiece carrying fixture 2, and are optically coupled to the laser source 10 so as to split and channel the laser beam emitted by the laser source 10 to said at least one internal through passage 7.

In other words, the distal ends of the optic fibres 11 are adapted to direct their laser beam inside said at least one through passage 7, towards said intersection point P.

In addition, the laser appliance 3 preferably also comprises, for each optic fibre 11, an optical beam conditioning device 12, which is located downstream of the optic fibre 11, or rather downstream of the distal end of the optic fibre 11, so as to be crossed by the laser beam r₁, r₂ .... rₙ coming out of said optic fibre 11, and is structured so as to collimate, and optionally also slightly focus, said laser beam r₁, r₂ .... rₙ in a predefined direction that intersects said intersection point P, advantageously inside the receiving seat 5a of the workpiece carrying template 5.

Several optical devices 12 are therefore aligned to a same contact area 105 between the rear casing 101 and an internal component 104.

In further detail, the various optical devices 12 are located at, or are in any case aligned to, the through passage 7 of the workpiece carrying fixture 2, so as to direct the laser beam r₁, r₂, .... rₙ towards the intersection point P that is locally aligned to the same through passage 7, or rather towards the contact area 105 locally aligned to the same through passage 7.

In other words, the through passage 7 of the workpiece carrying fixture 2 is crossed by two or more distinct laser beams r₁, r₂, .... rₙ, which intersect each other inside the workpiece carrying fixture 2 at the intersection point P.

Clearly, the optical beam conditioning devices 12, even if directing their laser beam r₁, r₂, .... rₙ towards the same intersection point P, may be aligned to a plurality of through passages 7 of the workpiece carrying fixture 2.

In other words, while directing the laser beams r₁, r₂, .... rₙ towards the same intersection point P, the optical beam conditioning devices 12 may be arranged each at, or aligned to, a respective internal through passage 7 of the workpiece carrying fixture 2.

In addition, a same internal through passage 7 may be shared or, rather, crossed by two or more laser beams r₁, r₂, .... rₙ directed towards non-coinciding intersection points P.

With reference to Figures 5, 8 and 9, in the example shown, in particular, the workpiece carrying fixture 2, or rather the workpiece carrying template 5, is preferably provided with a plurality of internal through passages 7, each aligned to a respective contact area 105.

The laser appliance 3, in turn, is preferably adapted to direct said plurality of laser beams r₁, r₂, .... rₙ towards the workpiece carrying fixture 2, so as to cross/intersect the laser beams r₁, r₂, .... rₙ, in groups, in a plurality of intersection points P, each of which is located at a respective contact area 105 between the rear casing 101 and an internal component 104, in order to locally add up the powers of the various laser beams r₁, r₂, .... rₙ.

In other words, the laser appliance 3 is preferably provided with a bundle of optic fibres 11, which end in pairs at the various through passages 7 of the workpiece carrying fixture 2, or rather of the workpiece carrying template 5, and is optically coupled to the laser source 10 so as to split the high-power laser beam generated by said laser source 10 between the various optic fibres 11 of the bundle.

In further detail, the bundle of optic fibres 11 is preferably optically coupled to the laser source 10 so as to split the laser beam generated by said laser source 10 into substantially equal parts between the various optic fibres 11 of the bundle.

Clearly, in a different embodiment, the bundle of optic fibres 11 may be coupled to the laser source 10 so as to distribute the high-power laser beam in a differentiated manner between the various optic fibres 11 of the bundle. For example, a higher laser power may be channelled towards the optic fibre 11 that has its distal end very far from the corresponding contact area or zone 105 between the rear casing 101 and the internal component 104.

In addition, the laser source 10 is preferably adapted to emit a laser beam with nominal power higher than 10 watt and/or a wavelength λ₀ lower than 900 nm (nanometres).

Clearly, the number of optic fibres 11 that end at each through passage 7 of the workpiece carrying fixture 2 may also be higher than two.

Each optical device 12, on the other hand, is preferably located at or in proximity of the mouth of the relative through passage 7 of the workpiece carrying fixture 2.

In addition, each optical device 12 is preferably located on the distal end of the corresponding optic fibre 11, and preferably comprises one or more lenses advantageously of the meniscus and/or planoconvex type, which are arranged one after the other so as to be crossed by the laser beam r₁, r₂, .... rₙ coming out of the optic fibre 11.

Each optical device 12, moreover, is preferably also rigidly fixed to the workpiece carrying fixture 2, or rather to the workpiece carrying template 5, and is preferably structured so as to retain the distal end of the relative optic fibre 11.

Clearly each optical device 12 of the laser appliance 3 is structured so as to collimate the laser beam r₁, r₂, .... rₙ coming out of the relative optic fibre 11 towards a relative intersection point P, which is located inside the receiving seat 5a of the workpiece carrying template 5, at the contact area 105 between the rear casing 101 and an internal component 104. Optionally each optical device 12 of the laser appliance 3 is furthermore structured so as to also restrict/focus the laser beam r₁, r₂, .... rₙ exiting from the relative optic fibre 11.

With reference to Figures 7, 8 and 9, the pressing assembly 4, in turn, is preferably located in front of the workpiece carrying fixture 2, or rather of the workpiece carrying template 5, and is preferably movable substantially rectilinearly from and towards the same workpiece carrying fixture 2 or vice versa.

In further detail, the pressing assembly 4 is preferably located in front of the mouth of the receiving seat 5a of the workpiece carrying template 5, and is movable substantially rectilinearly from and towards the same receiving seat.

In addition, the pressing assembly 4 preferably includes a locking template 13 with substantially non-deformable structure, which is advantageously made of metallic material, and is provided with one or more oblong protruding appendages, each of which is shaped so as to freely penetrate into the rear casing 101 momentarily accommodated in the workpiece carrying fixture 2 through the mouth of the same rear casing 101, and press a corresponding internal component 104 firmly in abutment against the inner surface of the rear casing 101, clearly at a relative contact area 105.

In further detail, the locking template 13 is preferably provided with one or more shaped protrusions 13a, which extend cantilevered parallel to the movement direction d of the pressing assembly 4 from and towards the workpiece carrying fixture 2 or vice versa.

In addition, the shaped protrusion or protrusions 13a of locking template 13 are preferably aligned each to a respective contact area 105, and are preferably structured so as to abut against the corresponding internal component or components 104 present inside the rear casing 101, each at the back of a respective fixing pin 107 of the internal component 104.

With reference to figures 1, 6, 7, 8 and 9, in the example shown, in particular, the workpiece carrying fixture 2 and the pressing assembly 4 are preferably arranged one spaced above the other, vertically aligned to one another, and are preferably movable one from and towards the other in a substantially rectilinear manner.

In further detail, the workpiece carrying template 5 is preferably oriented with the mouth of the receiving seat 5a turned upwards, so that the internal component or components 104 remain in place by gravity inside the rear casing 101 temporarily accommodated in the same workpiece carrying template 5.

On the other hand, the pressing assembly 4, or rather the locking template 13, is preferably arranged spaced above the workpiece carrying fixture 2, or rather above the workpiece carrying template 5, with the shaped protrusion(s) 13a turned downwards, i.e. towards the workpiece carrying template 5.

Preferably the pressing assembly 4, or rather the locking template 13, is furthermore stationary in space, while the workpiece carrying fixture 2, or rather the workpiece carrying template 5, and advantageously also at least part of the laser appliance 3 is/are movable vertically from and towards the pressing assembly 4, or rather the locking template 13.

Clearly, in a different embodiment, the pressing assembly 4, or rather the locking template 13, may move rectilinearly from and towards the workpiece carrying fixture 2 that instead remains stationary in space.

With reference to Figures 1 and 8, in particular, the automotive-lighting-units assembly machine 1 is preferably provided with a rigid supporting framework 20, which is structured to be stably rested on, and optionally be also rigidly anchored to, the ground.

The workpiece carrying fixture 2 and the pressing assembly 4 are preferably located on the supporting framework 20 one above the other, vertically aligned to each other.

In further detail, the pressing assembly 4 is preferably fixed on the top of the supporting framework 20, with the locking template 13, or rather the shaped protrusion(s) 13a of the locking template 13, turned downwards.

The workpiece carrying fixture 2, on the other hand, is preferably fixed to the supporting framework 20 spaced beneath the pressing assembly 4, with the mouth of the receiving seat 5a of the workpiece carrying template 5 turned upwards, and with the capability of moving vertically from and towards the pressing assembly 4.

The laser appliance 3, in turn, is preferably located on the supporting framework 20 beneath the workpiece carrying fixture 2, or rather beneath the workpiece carrying template 5.

In addition, the automotive-lighting-units assembly machine 1 preferably also comprises: an advantageously pneumatically- or hydraulically- operated, a moving device 21 which is adapted to vertically move the workpiece carrying fixture 2 from and towards the pressing assembly 4; and an electronic control device 22 which is adapted to command the moving device 21.

In further detail, the moving device 21 is adapted to move, on command, the workpiece carrying fixture 2 between a raised position (see Figures 1, 6, 7 and 8) in which the workpiece carrying template 5 is at a given minimum distance from the locking template 13 of the pressing assembly 4, and a lowered position (see Figures 1 and 5) in which the workpiece carrying template 5 is at a given maximum distance from the locking template 13 of the pressing assembly 4.

In the raised position, the shaped protrusion or protrusions 13a of the locking template 13 penetrate inside the rear casing 101 accommodated in the workpiece carrying fixture 2, so as to reach and press at least part of the internal component or components 104 present inside the rear casing 101 against the inner surface of said rear casing 101, at the relative contact area(s) or zone(s) 105.

In the lowered position, the shaped protrusion or protrusions 13a of the locking template 13 are instead far from the workpiece carrying template 5 so as not to hinder, or rather to facilitate, removal and insertion of the rear casing 101 from/into the receiving seat 5a of the workpiece carrying template 5.

In further detail, in the example shown, the supporting framework 20 preferably has a gantry structure, and is therefore provided with at least one pair of vertical uprights and an upper crossbeam that extends more or less horizontally and bridge-like between the upper ends of the vertical uprights.

The pressing assembly 4 is preferably rigidly fixed to the upper crossbeam of the supporting framework 20. The workpiece carrying fixture 2, on the other hand, is preferably fixed above a movable platform, which is located spaced beneath the upper crossbeam and is advantageously coupled in a vertically slidable manner to the vertical uprights of the supporting framework 20.

The moving device 21, on the other hand, preferably comprises a pair of double-acting hydraulic cylinders or the like, which are arranged in a vertical position each beside a respective vertical upright of supporting framework 20, and are adapted to raise and lower, on command, the movable platform that accommodates the workpiece carrying fixture 2.

Clearly, in a different embodiment, the moving system of machine 1 may move vertically the pressing assembly 4 from and towards the workpiece carrying fixture 2, or may move vertically both the workpiece carrying fixture 2 and the pressing assembly 4.

The assembly of automotive lighting unit 100 firstly comprises the step of realizing, preferably via injection moulding, the rear casing 101 provided with at least one sector made of opaque polymeric material; and the step of realizing, preferably via injection moulding, at least one internal component 104 having at least a part/portion made of opaque polymeric material.

Clearly the rear casing 101 has at least one sector made of opaque polymeric material.

After having realized the rear casing 101 and the internal component or components 104, the assembly of automotive lighting unit 100 comprises the step of placing said at least one internal component 104 inside the rear casing 101, with the part/portion made of opaque polymeric material resting on the sector made of opaque polymeric material of the rear casing 101 in at least one contact area 105; and then the step of securing said at least one internal component 104 in a rigid and substantially non-removable manner to the rear casing 101, making at least one laser welding joint 106 at said mutual contact area 105.

The step of rigidly securing the internal component 104 to the rear casing 101, furthermore, entails directing, from different directions and for a predefined time interval, a plurality of laser beams r₁, r₂, .... rₙ towards said at least one contact area 105, so that said laser beams r₁, r₂, .... rₙ cross at an intersection point P which is located at the same contact area 105, in order to temporarily and jointly heat the polymeric material present in the neighbourhood of said contact area 105 up to melting point.

In addition, the power of each laser beam r₁, r₂, .... rₙ is selected so as not to melt or otherwise damage the opaque polymeric material at the incidence point of the laser beam r₁, r₂, .... rₙ on the first piece made of opaque polymeric material.

In other words, the step of securing the internal component 104 entails adding, in the neighbourhood of the intersection point P, the energy which the various laser beams r₁, r₂, .... rₙ transmit to the polymeric material, so as to reach an energy density such as to cause a localized peak/increase in temperature, the value of which is sufficient to cause the melting of the opaque polymeric materials that locally form the rear casing 101 and the internal component 104 respectively.

In further detail, said time interval is preferably lower than 30 s (seconds).

Preferably, the various laser beams r₁, r₂, .... rₙ furthermore all have substantially the same power and/or have a wavelength λ₀ advantageously higher than 400 nm (nanometres) and more conveniently higher than 900 nm (nanometres).

In addition, the assembly of the automotive lighting unit 100 preferably entails orienting the various laser beams r₁, r₂, .... rₙ so that, before reaching the contact area 105, they firstly pass through the piece locally made of the opaque polymeric material having lower absorption coefficient µ.

In other words, the piece turned towards the origin of the laser beams r₁, r₂, .... rₙ is made of an opaque polymeric material having an absorption coefficient µ lower than the piece on the opposite side of the contact area 105 with respect to the origin of the laser beams r₁, r₂, .... rₙ.

In further detail, the absorption coefficient µ of the piece firstly crossed by the laser beams r₁, r₂, .... rₙ is preferably lower by at least 250, and more advantageously at least 40%, than the absorption coefficient µ of the piece crossed secondly by the laser beams r₁, r₂, .... rₙ.

More specifically, the difference between the absorption coefficients µ of the two opaque polymeric materials is preferably greater than 350 of the absorption coefficient µ with higher value.

In the example shown, in particular, the laser beams r₁, r₂, .... rₙ are oriented so as to first pass through the sector made of opaque polymeric material of the rear casing 101, and the opaque polymeric material that forms said opaque-polymeric -material sector therefore has a laser-beam absorption coefficient µ lower than that of the opaque polymeric material forming the adjacent portion of internal component 104.

The making of the laser welding joint 106 at the contact area 105 between the internal component 104 and the rear casing 101 takes place for the following reasons, without compromising the structural integrity of the rear casing 101 and the internal component 104.

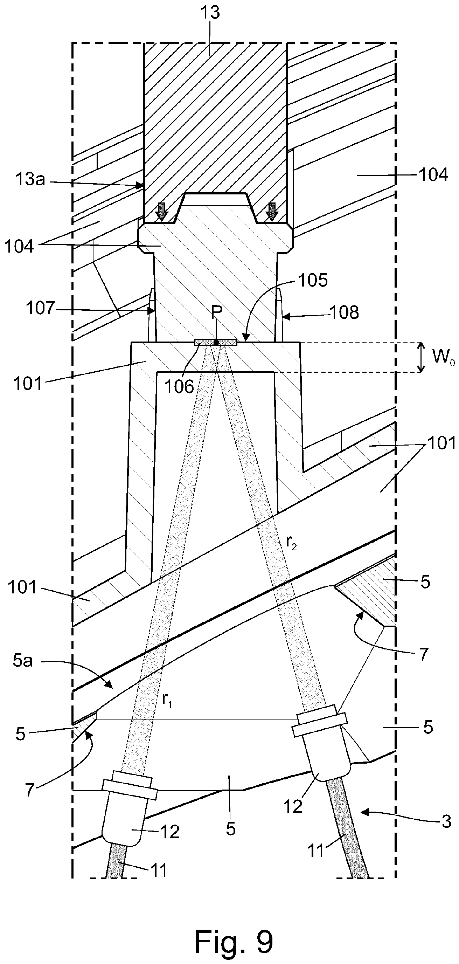

With reference to Figure 9, it is known that a laser beam, as it penetrates into the rear casing 101 made of opaque polymeric material, progressively loses its energy that is transferred to the opaque polymeric material in the form of heat.

According to the Beer-Lambert law, the quantity of energy transferred by the laser beam r to the polymeric material per unit of length of the optical path increases with the growing of the laser-beam absorption coefficient µ associated to the polymeric material which is crossed by the laser beam r.

Even when the contact area 105 is located between two pieces/ portions made of opaque polymeric material, therefore, using a laser beam with adequate power it would be theoretically possible to pass through the entire thickness of the rear casing 101, reach the contact area 105, and there locally heat the polymeric material to softening temperature.

Clearly the use of a very powerful laser beam is not feasible, because the laser beam would irreparably damage the polymeric material it encounters before reaching the contact area 105.

However, experimental tests have shown that by using two or more independent laser beams r₁, r₂, .... rₙ that, coming from different directions, intersect at the contact area 105 between the rear casing 101 and the internal component 104, it is possible to transfer, in the neighbourhood of the contact area 105, a quantity of energy such as to locally reach significantly higher temperature values than those detectable at the incidence points of the various laser beams r₁, r₂, .... rₙ that afterwards intersect in the same contact area 105.

By accurately arranging the laser beams r₁, r₂, .... rₙ it is therefore possible to heat up the opaque polymeric materials located in the neighbourhood of the contact area 105 between the rear casing 101 and the internal component 104 up to the softening temperature, while keeping the temperature of the polymeric material at the incidence points of the single laser beams r₁, r₂, .... rₙ at much lower values and such as not to melt or otherwise damage the polymeric material crossed.

In other words, by using an appropriate number of laser beams r₁, r₂, .... rₙ directed towards the contact area 105 from different directions, it is possible to keep, up to the contact area 105, the energy density at relatively low values that can be easily withstood by the opaque polymeric material without melting or sustaining structural damage.

If taken individually, therefore, each laser beam r₁, r₂, .... rₙ of the laser appliance 3 is not capable of heating the polymeric material crossed to its melting/softening temperature.

In addition, experimental tests have shown that it is possible to further increase the energy which the laser beams r₁, r₂, .... rₙ transfer to the polymeric material in the neighbourhood of the contact area 105, appropriately differentiating the values of the absorption coefficient µ of the two opaque polymeric materials present in the neighbourhood of the contact area 105.

In further detail, the energy that the laser beams r₁, r₂, .... rₙ transfer to the polymeric materials in the neighbourhood of the contact area 105 can further increase if the opaque polymeric material of the piece crossed first by the laser beam r₁, r₂, .... rₙ (i.e. the piece located upstream of the contact area 105 along the path of the laser beam), has an absorption coefficient µ lower than that of the opaque polymeric material of the piece located downstream of the contact area 105, i.e. the second piece.

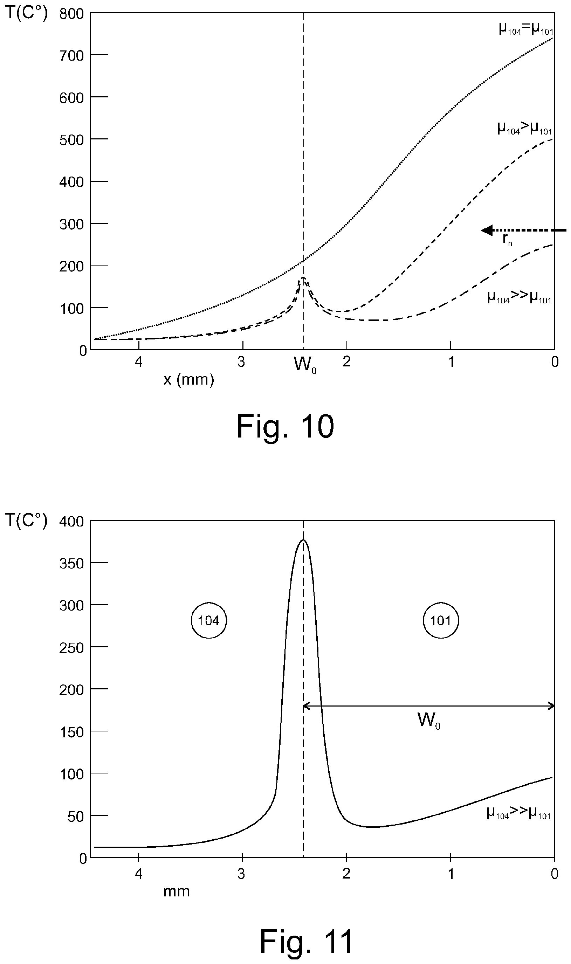

Figure 10 shows the temperature trend of the opaque polymeric material along the path followed by a laser beam rₙ inside firstly the rear casing 101 and then the internal component 104, starting from the incidence point (x=0) of the laser beam rₙ on the rear casing 101, and as the difference between the absorption coefficient µ101 of the polymeric material that forms the rear casing 101 and the absorption coefficient µ104 of the polymeric material that forms the internal component 104 increases.

According to said graph, if the absorption coefficient µ₁₀₄ of the internal component 104 is greater than the absorption coefficient µ₁₀₁ of the rear casing 101, the temperature of the polymeric material assumes high values at the incidence point of the laser beam rₙ (x=0), and then decreases until it reaches the contact area 105, where a small temperature peak is detected caused by the higher absorption coefficient µ₁₀₄ of the polymeric material that forms the internal component 104.

Clearly the distance between the temperature peak and the incidence point of the laser beam rₙ (x=0) substantially corresponds to the local thickness w₀ of the rear casing 101.

In addition, with reference to Figure 10, the same experimental tests have shown that the peak temperature at the contact area 105 increases more or less proportionally to the value of the absorption coefficient µ of the polymeric material forming the piece crossed by the laser beam rₙ before reaching the contact area 105, i.e. the absorption coefficient µ₁₀₁ of the rear casing 101.

Unfortunately, a high absorption coefficient µ of the poly-meric material upstream of the contact area 105 entails also having a high temperature of the opaque polymeric material at the incidence point (x=0) of the laser beam rₙ.

Therefore, since the temperature of the opaque polymeric material has to be kept at non-critical values at the incidence point (x=0) of the laser beam rₙ, the peak temperature in the contact area 105 between the rear casing 101 and the internal component 104 due only to the laser beam rₙ cannot reach values such as to melt the polymeric material in the neighbourhood of the contact area 105.

If, on the other hand, two or more independent laser beams r₁, r₂, .... rₙ reach the contact area 105 from different directions and intersect at the contact area 105 between the rear casing 101 and the internal component 104, the temperature peak in the contact area 105 reaches significantly higher values than those detectable at the incidence points (x=0) of the single laser beams r₁, r₂, .... rₙ and such as to melt the polymeric material in the neighbourhood of the contact area 105.

Figure 11 shows the temperature trend of the polymeric material along the thickness of the rear casing 101 and then of the internal component 104, when the laser beams r₁, r₂, .... rₙ intersect at the contact area 105 coming from different directions, and the absorption coefficient µ₁₀₁ of the opaque polymeric material forming the rear casing 101 is equal to approximately half the absorption coefficient µ₁₀₄ of the opaque polymeric material forming the internal component 104.

According to said trend, the intersection of the laser beams r₁, r₂, .... rₙ at the contact area 105 in combination with the differentiation of the absorption coefficients µ of the two opaque polymeric materials present in the neighbourhood of the contact area 105, allows to reach, in contact area 105, much higher temperatures, which are sufficient to melt the polymeric material for making the laser welding joint 106.

The temperature of the polymeric material at the incidence points, on the other hand, remains at relatively low values that can be easily withstood by the polymeric material forming the rear casing 101 without evident damage.

In further detail, experimental tests have shown that, to make the laser welding joint 106 without damaging the polymeric material at the incidence points of the single laser beams r₁, r₂, .... rₙ, the absorption coefficient µ of the piece crossed firstly by the laser beams r₁, r₂, .... rₙ must be preferably at least 250 lower, and more advantageously at least 400 lower, than the absorption coefficient µ of the piece reached secondly by said laser beams r₁, r₂, .... rₙ.

More specifically, the difference between the absorption coefficients µ of the two opaque polymeric materials must advantageously be higher than 350 of the absorption coefficient µ with higher value.

In addition, the absorption coefficient µ₁₀₁ of the polymeric material that forms the rear casing 101 must be preferably between 0,05 (1/mm) and 1 (1/mm), and more advantageously between 0,1 (1/mm) and 0,2 (1/mm). The absorption coefficient µ₁₀₄ of the polymeric material that forms the internal component 104, on the other hand, must be preferably between 0,2 (1/mm) and 3 (1/mm), and more advantageously between 0,8 (1/mm) and 2 (1/mm).

With reference to Figures 7 and 8, preferably the step of rigidly securing the internal component 104 to the rear casing 101 additionally entails pressing the internal component 104 to be welded against the inner surface of the rear casing 101, at the/each contact area 105, while the laser beam r heats the opaque polymeric materials in the neighbourhood of the contact area 105.

Lastly, the assembly of automotive lighting unit 100 preferably comprises, after the making of the various laser welding joints 106, also the step of welding the front half-shell 102 on the mouth of the rear casing 101.

In other words, the assembly of automotive lighting unit 100 preferably ends with the welding of the front half-shell 102 on the mouth of the rear casing 101.

Operation of the automotive-lighting-units assembly machine 1 is easily inferable from the above description.

With reference to Figures 5 and 6, after realizing the rear casing 101 and the internal component or components 104, the assembly of automotive lighting unit 100 preferably comprises the step of placing the rear casing 101 in the workpiece carrying fixture 2, or rather inside the receiving seat 5a of the workpiece carrying template 5; and advantageously also the step of locking/immobilizing the same rear casing 101 in the workpiece carrying fixture 2, or rather inside the receiving seat of the workpiece carrying template 5.

With reference to Figure 6, after placing and advantageously also locking the rear casing 101 in the workpiece carrying fixture 2, the assembly of automotive lighting unit 100 preferably comprises the step of placing the internal component or components 104 inside the rear casing 101 stationary in the workpiece carrying fixture 2, each resting on the inner surface of the rear casing 101 in at least one respective contact area 105.

With reference to Figures 8 and 9, after placing the internal component or components 104 inside the rear casing 101, the assembly of automotive lighting unit 100 comprises the step of activating the laser appliance 3 so as to direct a plurality of laser beams r₁, r₂, .... rₙ towards one or more intersection points P that are located inside the workpiece carrying fixture 2, each at a respective contact area 105 between the rear casing 101 and an internal component 104.

Preferably the assembly of the automotive lighting unit 100 furthermore entails directing the plurality of laser beams r₁, r₂, .... rₙ towards the intersection point(s) P located inside the workpiece carrying fixture 2, or rather towards the contact area(s) 105 between the rear casing 101 and the internal component(s) 104, causing said laser beams r₁, r₂, .... rₙ to pass inside the through passages 7 present in the workpiece carrying fixture 2.

When they reach the relative intersection point P, the laser beams r₁, r₂, .... rₙ add up their powers and locally heat the rear casing 101 and the internal component 104, bringing the polymeric materials located in the neighbourhood of the contact area 105 between the rear casing 101 and the internal component 104 to melting temperature.

The subsequent re-hardening of the polymeric material joins the two pieces in a rigid and non-removable manner, forming the laser welding joint 106.

With reference to Figures 7, 8 and 9, before activating the laser appliance 3, the assembly of automotive lighting unit 100 preferably also comprises the step of activating the pressing assembly 4 so as to press, against the inner surface of the rear casing 101 momentarily accommodated in the workpiece carrying fixture 2, the internal component or components 104 previously placed inside the same rear casing 101.

In further detail, the assembly of automotive lighting unit 100 preferably entails moving the locking template 13 of the pressing assembly 4 towards the workpiece carrying template 5 of the workpiece carrying fixture 2, so as to introduce the shaped protrusion(s) 13a of the locking template 13 inside the rear casing 101 present in the workpiece carrying fixture 2, up to reach and press the internal component(s) 104 against the inner surface of the same rear casing 101, at the respective contact areas 105.

Clearly the positioning of the internal component or components 104 inside the rear casing 101 and/or the welding of the internal components 104 to the rear casing 101 can be carried out according to a predefined time sequence.

The advantages resulting from use of the assembly method described above and of the automotive-lighting-units assembly machine 1 are noteworthy.

The securing of the internal components 104 of the automotive lighting unit 100 to the rear casing 101 by means of the laser welding joints 106 allows to eliminate all, or in any case the majority of, the metal screws currently used to secure the internal components of the automotive lighting unit to its rear casing, with the remarkable reduction of weight and production costs that this entails.

Furthermore, the immediate securing of the internal component or components 104 by means of the laser welding joints 106 allows to eliminate, or at least drastically reduce, the number of shoulders, centring pins and/or snap-on locking tabs usually present inside the rear casing of an automotive lighting unit, thus considerably simplifying the structure of the mould used to produce the rear casing 101.

The creation of these centring and/or snap locking systems, in fact, results in an extremely complicated shape of the mould used to produce the rear casing of an automotive lighting unit assembled in a traditional manner.

In addition, welding with the aid of a plurality of laser beams r₁, r₂, .... rₙ that converge on an intersection point P from different directions solves all the operating limits connected to the use of internal lighting pieces/components made of polymeric material opaque to visible light.

Furthermore, if the opaque polymeric material that constitutes the piece located upstream of the contact area 105, along the path of the laser beams r₁, r₂, .... rₙ that make the laser welding joint 106, has an absorption coefficient µ lower than that of the opaque polymeric material constituting the piece located downstream of the contact area 105, it is possible to drastically reduce the thermal stress on the first piece made of opaque polymeric material.

Lastly, since it is successful in welding the pieces made of opaque polymeric material to one another, the automotive-lighting-units assembly machine 1 greatly simplifies the automotive-lighting-unit assembly line, with all the advantages that this entails. In fact, the automatic screwdriver(s) are no longer necessary.

Finally, it is clear that modifications and variations may be made to the assembly method of the automotive lighting unit 100 and to the automotive-lighting-units assembly machine 1 without however departing from the scope of the present invention.

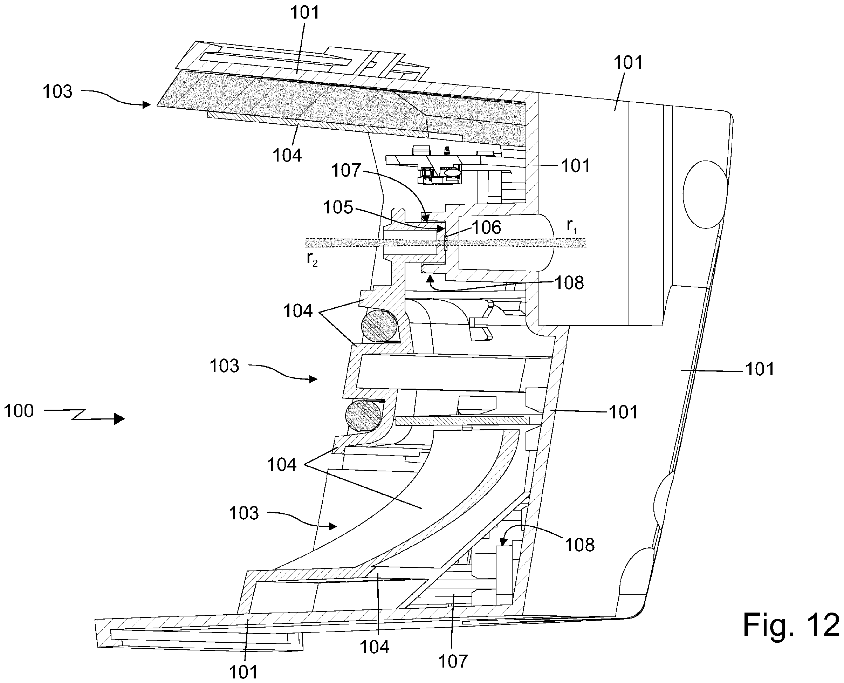

For example, with reference to Figure 12, in a different embodiment the plurality of laser beams r₁, r₂, .... rₙ that converge towards a same intersection point P comprise one or more laser beams r₁ that reach the intersection point P passing first through the rear casing 101, and one or more laser beams r₂ that reach the intersection point P passing first through the internal component 104.

In other words, the laser beams r₁, r₂, .... rₙ that converge towards a same intersection point P reach the same intersection point P arriving from opposite sides of the contact area 105 between the rear casing 101 and the internal component 104.

In this case, the absorption coefficient µ₁₀₁ of the polymeric material forming the rear casing 101 may have a value substantially equal to that of the polymeric material forming the internal component 104, i.e. the absorption coefficient µ₁₀₄.

In this embodiment, therefore, also the pressing assembly 4, or rather the locking template 13, is preferably provided with one or more internal through passages that allow one or more laser beams to reach the or one of the internal components 104, at its contact area or zone 105 with the rear casing 101.

In addition, in this first embodiment variation, the machine 1 is advantageously also provided with a second laser appliance, which is coupled to the pressing assembly 4, or rather to the locking template 13, so as to generate and direct the or its laser beams inside the rear casing 101, through the internal through passage(s) of the pressing assembly 4.

In a second embodiment variation of machine 1, moreover, the laser appliance 3 may comprise a series of independent laser sources, each of which is structured so as to emit, on command, a single laser beam towards a corresponding intersection point P, i.e. towards a corresponding contact area 105 between the rear casing 101 and an internal component 104.

Clearly, activation and deactivation of the independent laser sources that direct their laser beams towards a same intersection point P must be synchronized so as to add up the powers of the laser beams r₁, r₂, .... rₙ at the same intersection point P.

In a third embodiment variation of machine 1, in addition, the laser appliance 3 may comprise a plurality of independent laser sources and, instead of the bundle of optic fibres 11, a plurality of movable laser deflectors, each of which is able to divert, on command, the laser beam coming from a respective laser source, on choice and alternatively, towards a plurality of different intersection points P, namely towards a plurality of contact areas 105.

Alternatively, the independent laser sources may be fixed each on a respective movable robotic arm, which supports the laser source and is capable to align, on command, the laser source to any one of the intersection points P.

Clearly the independent laser sources and the relative movable laser deflectors or robotic arms must be commanded so that the two or more laser beams coming from the two or more independent laser sources reach the same intersection point P more or less simultaneously.

In this variation, therefore, the laser welding joints 106 are made one after the other, preferably according to a predefined time sequence.

Lastly, in a further not-shown embodiment variation, the rear casing 101 may have one or more sectors made of transparent polymeric material, adjoining or surrounded by one or more sectors made of opaque polymeric material preferably having larger dimensions.

Clearly, in this variation the contact area 105 between the rear casing 101 and the/each internal component 104 is located at the or at one of the sectors made of opaque polymeric material that form the rear casing 101.

## Claims

1. An assembly method of an automotive lighting unit (100) comprising: a rear casing (101), which is concave in shape and is adapted to be fixed to the vehicle body; an at least partially transparent, front half-shell (102), which is arranged to close the mouth of said rear casing (101) so as to form/delimit a hollow housing; and at least one lighting assembly (103), which is located inside the rear casing (101) and is adapted to backlight the front half-shell (102);
the assembly method being **characterized in that** it comprises the steps of:
- realizing a rear casing (101) with at least one sector made of opaque polymeric material;
- realizing at least one internal lighting component (104) having at least one portion made of opaque polymeric material;
- placing said at least one internal lighting component (104) inside the rear casing (101), with said portion made of opaque polymeric material resting on the sector made of opaque polymeric material of the rear casing (101), in at least one contact area (105);
- securing said at least one internal lighting component (104) to the rear casing (101) by making at least one laser welding joint (106) at said at least one contact area (105).

2. The assembly method of an automotive lighting unit according to Claim 1, wherein the step of securing the internal lighting component (104) to the rear casing (101) entails directing, from different directions and for a predefined time interval, a plurality of laser beams (r₁, r₂, .... rₙ) towards said at least one contact area (105), so as to intersect said laser beams (r₁, r₂, .... rₙ) at an intersection point (P) that is located substantially at the contact area (105), in order to melt the polymeric material present in the neighbourhood of said contact area (105).

3. The assembly method of an automotive lighting unit according to Claim 2, wherein said predefined time interval is lower than 30 s.

4. The assembly method of an automotive lighting unit according to any one of the preceding claims, wherein said laser beams (r₁, r₂, .... rₙ) are oriented so as to first pass through the piece made of the opaque polymeric material locally having the lower laser-beam absorption coefficient (µ).

5. The assembly method of an automotive lighting unit according to Claim 4, wherein the laser-beam absorption coefficient (µ) of the piece crossed firstly by the laser beam (r) is at least 250 lower than the laser-beam absorption coefficient (µ) of the piece crossed secondly by said laser beam (r) .

6. The assembly method of an automotive lighting unit according to Claim 4 or 5, wherein one or more of said laser beams (r₁, r₂, .... rₙ) are oriented so as to cross first the sector made of opaque polymeric material of the rear casing (101), and the opaque polymeric material forming said sector made of opaque polymeric material has a laser-beam absorption coefficient (µ) lower than that of the opaque polymeric material forming the adjacent portion of the internal lighting component (104) .

7. The assembly method of an automotive lighting unit according to any one of the Claims from 2 to 6, wherein said laser beams (r₁, r₂, .... rₙ) have a wavelength (λ₀) higher than 900 nm.

8. The assembly method of an automotive lighting unit according to any one of the Claims from 2 to 7, wherein the step of fixing the internal lighting component (104) to the rear casing (101) also entails pressing said at least one internal lighting component (104) against the rear casing (101), at said at least one contact area (105), while the laser beams (r₁, r₂, .... rₙ) heat up the opaque polymeric materials in the neighbourhood of said contact area (105).

9. An assembly machine (1) for automotive lighting units comprising a rear casing (101), a front half-shell (102) arranged to close the mouth of the rear casing (101), and one or more internal components (104) fixed inside said rear casing (101);
said automotive-lighting-units assembly machine (1) being **characterized in that** it comprises: a workpiece carrying fixture (2), which is adapted to accommodate a rear casing (101) having at least one sector made of opaque polymeric material, and also at least one internal component (104) which is placed inside the rear casing (101) and has at least one portion made of opaque polymeric material that rests on the sector made of opaque polymeric material of the rear casing (101), in at least one contact zone (105); and a laser appliance (3) which is adapted to generate and direct a plurality of laser beams (r₁, r₂, .... rₙ) towards the rear casing (101) accommodated in the workpiece carrying fixture (2);
wherein said laser appliance (3) is adapted to direct said plurality of laser beams (r₁, r₂, .... rₙ) towards the workpiece carrying fixture (2), so as to intersect said laser beams (r₁, r₂, .... rₙ) in at least one intersection point (P) located at said contact area (105), thus to locally add up the powers of said laser beams (r₁, r₂, .... rₙ) in order to make a laser welding joint (106) at said contact area (105).

10. The machine according to Claim 9, wherein said laser beams (r₁, r₂, .... rₙ) have a wavelength (λ₀) higher than 900 nm.

11. The machine according to Claim 9 or 10, wherein the workpiece carrying fixture (2) comprises a workpiece carrying template (5) which is provided with a receiving seat adapted to accommodate the rear casing (101), and with at least one through passage (7) that extends through the workpiece carrying template (5) up to the receiving seat, is aligned to said contact area (105), and is structured so as to allow at least one of said laser beams (r₁, r₂, .... rₙ) to pass through the workpiece carrying template (5) substantially without energy losses, and reach the outer surface of the rear casing (101) accommodated in the workpiece carrying template (5).

12. The machine according to Claim 9, 10 or 11 **characterized by** also comprising a pressing assembly (4) which is movable from and towards the workpiece carrying fixture (2) or vice versa, and is adapted to selectively press said at least one internal component (104) against the inner surface of the rear casing (101) accommodated in the workpiece carrying fixture (2).

13. An automotive lighting unit (100) comprising: a rear casing (101), which is concave in shape and is adapted to be fixed to the vehicle body; a front half-shell (102), which is arranged to close the mouth of said rear casing (101) and is provided with at least one transparent or semi-transparent sector; and at least one lighting assembly (103), which is located inside the rear casing (101) and is adapted to backlight the front half-shell (102);
the automotive lighting unit (100) being provided with at least one internal component (104) that is at least partially made of polymeric material and rests on the inner surface of the rear casing (101) in at least one contact area (105);
said automotive lighting unit (100) being **characterized in that** said rear casing (101) and said at least one internal component (104), at said contact area (105), are both made of opaque polymeric material, and **in that** said rear casing (101) and said at least one internal component (104) are rigidly secured to each other by means of a laser welding joint (106) made at said contact area (105).

14. The automotive lighting unit according to Claim 13, wherein said laser welding joint (106) is substantially spotlike.

15. The automotive lighting unit according to Claim 13 or 14, wherein the rear casing (101) and said at least one internal component (104), at said contact area (105), are made of opaque polymeric materials which have laser-beam absorption coefficients (µ) different from one another.

16. The automotive lighting unit according to Claim 15, wherein the difference between the laser-beam absorption coefficients (µ) of the two opaque polymeric materials is greater than 350 of the laser-beam absorption coefficient (µ) with higher value.
